Europäisches Patentamt

European Patent Office

Office européen des brevets

(19)

(11) **EP 1 176 577 A1**

(12) **EUROPEAN PATENT APPLICATION**

(43) Date of publication:
30.01.2002 Bulletin 2002/05

(51) Int Cl.7: **G09F 21/04**, B29C 63/02

(21) Application number: 00116101.7

(22) Date of filing: 27.07.2000

(84) Designated Contracting States:
**AT BE CH CY DE DK ES FI FR GB GR IE IT LI LU MC NL PT SE**
Designated Extension States:
**AL LT LV MK RO SI**

(71) Applicant: **MINNESOTA MINING AND MANUFACTURING COMPANY**
St. Paul, Minnesota 55133-3427 (US)

(72) Inventors:
• **Pohl, Daniel P.**
Saint Paul Minnesota 55133-3427 (US)

• **Steelman, Ronald S.**
Saint Paul Minnesota 55133-3427 (US)
• **David, John R.**
Saint Paul Minnesota 55133-3427 (US)
• **Calisto, Charles A.**
Saint Paul Minnesota 55133-3427 (US)

(74) Representative: **VOSSIUS & PARTNER**
Siebertstrasse 4
81675 München (DE)

(54) **Graphic application system and methods**

(57)    The invention provides a method of applying coordinated graphics to vehicles located in locations that are remote with respect to each other. In this method, Application Centers preapproved by a Graphic Coordination Center for applying film graphics are established at various locations and located such that they will be conveniently proximate to vehicles in various regions such that the vehicles can be routed to an Application Center with minimal disruption in scheduling of the use of the vehicle. Predetermined vehicles to be provided with film graphics are dispatched to preselected Application Centers. Thereby the Graphic Coordination Center performs logistics operations. Further the invention provides a system of applying coordinated graphics to a plurality of vehicles located in locations that are remote with respect to each other including an apparatus for laminating films to substrates where lamination pressure is generated at least partially by a vacuum drawn in a vacuum cavity.

EP 1 176 577 A1

## Description

This invention concerns systems and methods for applying graphics to a plurality of vehicles. More particularly, the present invention provides systems and methods for applying graphics to a plurality of vehicles in a coordinated manner in numerous locations.

Vehicles have increasingly been used to display graphic designs, logos, advertisements and the like in industry. This has been found to be an effective way to create a large impact in the marketplace by widely advertising ideas and corporate identity symbols in the environment of both highways and city streets.

Custom painted vehicles were perhaps the first iteration of this version of mobile mass marketing. Custom painting, however, tends to be limited in number of vehicles involved. Costs of custom painting are prohibitive as the numbers of vehicles increase, because there is little or no efficiency of scale. Further, it may be difficult to provide a uniform image of the paint jobs are provided at multiple locations. Paint suitable for application to vehicles generally involves emission of volatile solvents or release of materials that pollute the environment. Paint processes in general are difficult to perform in an environmentally friendly manner. Finally, due to fumes and explosion hazards, it generally is not possible to work on any other aspect of a vehicle at the same time as it is being painted.

Another example for applicating a graphic design and the like on a vehicle can be found in the lamination of films. The lamination of films often requires that pressure be supplied to force a film against a substrate like the side of a vehicle to which it is to laminated. The films are often coated with an adhesive to adhere the film to the substrate, but lamination of the adhesive-coated film under pressure often assists in providing a more secure bond between the film and the substrate. The use of pressure may also provide other advantages, e.g., reducing bubble formation, improving conformity, etc.

Although it is desirable to use pressure when laminating a film to a substrate, it can be difficult to provide enough pressure to effectively influence the lamination process. The result is that the size and weight of the rolls and supporting structure may be massive to compensate for roll deflection while generating sufficient and uniform pressure at the lamination point.

Graphics that have been pre-printed on adhesive-coated plastic films, especially vinyl films, have been applied to a variety of surfaces for a variety of reasons such as advertisement, decoration, protection and the like. These surfaces can be very large in area, typically as much as 3 m X 16 m. Such graphics have been found to be very effective for providing a uniform look to multiple vehicles. These films with a certain graphic are adhered for example to very large horizontal or vertical surfaces such as truck trailer sides or walls, billboards and the like. The films are seldom large enough to cover the entire surface with a single, integral film, so multiple films are typically used. In addition, attempts to make larger films result in films that are more difficult to handle and to register to other films. However, these films are difficult to apply to vehicles due to contours on the vehicle or the very large size of some of the films, or the registration required to apply multiple films to a surface to provide a single image covering the entire surface. Additionally, vehicle surfaces generally have vast even and uneven portions, such as a truck trailer side that has flat surfaces interrupted by either corrugations or rivets, or both. These surfaces with some combination of flat portions, protrusions, and indentations require very skilled persons to adhere the film to the surfaces and then assure that such film adheres also to the protrusions or indentations, or both.

In the most common methods of applying these films, a small plastic squeegee approximately 10 cm long is typically used to manually force the film against the substrate. This is a very labor intensive process. Furthermore, this application requires skill and patience to get an application that is well adhered, free of wrinkles, and in which all films are in register. Current techniques for treating rivets to minimize lifting involve (a) perforating the film around the rivet, (b) heating the film with a heat source, usually and hot air gun or a torch, and (c) burnishing down the film with a stiff brush, usually about 2.54 cm in diameter with 1.25 cm long bristles attached to a short wooden handle called a rivet brush. Often post-treatment with heat is used to increase bonding and further reduce stress in the film after it has been adhered to the irregular substrate. The film is typically heated while it is bridging the area around each type of surface irregularity, which can be summarized to be either a protrusion or an indentation. Because of the low mass of the film and the high temperature of the heat source, heating rates are several hundred degrees per second. Similar cooling rates are also occurring. If the film is too soft because of the heating when it is contacted with a circular motion using the rivet brush, the film is likely to be damaged. If the film is too cool, the stress is not eliminated adequately and lifting results eventually. It is therefore very difficult for one skilled in the art to assuredly adhere the adhesive-coated film to the irregular surface while the film is fully softened without damaging the film. If there is damage, the film is weakened at that location and diminishes the durability of the film. If there is an image graphic on that film, the image is marred at the damaged location. An aberration in an image, even if the image is as large as a mural on the side of truck trailer, is quite noticeable and unsatisfactory to the owner of the trailer, the marketer of a product shown in the mural on the trailer, and the graphic fabricator that has invested considerable labor and other effort to adhere the graphic film to the side of the trailer.

The object of the present invention is to provide improved systems and methods for applying graphics. This object is achieved with the features of the claims.

The present invention provides a method of applying coordinated graphics to a plurality of vehicles located in locations that are remote with respect to each other. In this method, Application Centers preapproved by a Graphic Coordination Center for applying film graphics are established at various locations. These Application Centers are located such that they will be conveniently proximate to vehicles in various regions such that the vehicles can be routed to an Application Center with minimal disruption in scheduling of the use of the vehicle. Predetermined vehicles of the plurality of vehicles to be provided with film graphics are dispatched to preselected Application Centers that are convenient in location to the predetermined vehicle, where a film graphic to be applied to the predetermined vehicle is applied. Thereby the Graphic Coordination Center may perform different logistics operations as logistics management support for locating and scheduling vehicles for application of film graphics thereto, logistics management support for location and printing of film graphics and logistics management support for availability of the Application Center for application of film graphics to a vehicle.

Further the present invention provides a system of applying coordinated graphics to a plurality of vehicles located in locations that are remote with respect to each other including an apparatus for laminating films to substrates where lamination pressure is generated at least partially by a vacuum drawn in a vacuum cavity.

Advantages of the apparatus and methods include the ability to provide relatively high pressures without the expected massive mechanical structures and, in addition, the uniformity of the lamination pressures across the width of the apparatus.

The apparatus and methods may be particularly useful to assist in the application of adhesive-coated plastic films, particularly vinyl films, to large area surfaces to provide improved appearance, durability, etc. Some of the most common surfaces include truck sides, vehicles but also walls, signs, portions of a building, etc. These large surfaces require extensive time and labor for application of films. This often adds more cost to the project that does the film itself. Furthermore, many of these applications are on surfaces that contain compound-curved protrusions or indentations such as channels or rivets or other irregularities that increase application time and often produce wrinkles.

Normally the application of films is being done using a small (approximately 10 cm) squeegee on very large graphics. With typical surfaces 3 meters high and 16 meters long in, e.g., truck applications and possibly much bigger for building graphics, application of the film can be very time consuming. The small rivets on the surface or series of indentations further complicate the application and are a source for wrinkles and similar defects.

The system of the present invention comprises an apparatus using a new technique to adhere adhesive-coated films to large area surfaces, wherein the force is generated by a partial vacuum at the interface of application. The technique is also especially effective on smaller, irregular surfaces.

In one aspect, the system of the present invention comprises an apparatus including a first end and a second end; a first roll having a longitudinal axis extending between the first and second ends; a second roll having a longitudinal axis extending between the first and second ends, wherein the second roll is spaced apart from the first roll, and further wherein the longitudinal axes of the first and second rolls are generally parallel with each other; a seal mechanism extending between the first and second ends and the first and second rolls, wherein the seal mechanism roll forms a seal with each of the first and second rolls; a vacuum cavity formed between the seal mechanism and the first and second rolls; and a vacuum port in fluid communication with the vacuum cavity.

In another aspect, the system of the present invention comprises an apparatus including a first end and a second end; a pair of first rolls including an upper and lower first roll forming a first nip, each of the first rolls having a longitudinal axis extending between the first and second ends; a pair of second rolls including an upper and lower second roll forming a second nip, each of the second rolls having a longitudinal axis extending between the first and second ends, wherein the second nip and the second rolls are spaced apart from the first nip and the first rolls, and further wherein the longitudinal axes of the first and second rolls are generally parallel with each other; an upper seal mechanism extending between the first and second ends and the upper first and second rolls, wherein the upper seal mechanism forms a seal with each of the upper first and second rolls; a lower seal mechanism extending between the first and second ends and the lower first and second rolls, wherein the lower sealing roll forms a seal with each of the lower first and second rolls; a vacuum cavity formed between the upper and lower seal mechanisms, the first and second rolls, and the lower first and second rolls; and a vacuum port in fluid communication with the vacuum cavity.

In another aspect, a method of laminating a film by providing an apparatus according to the present invention; locating the apparatus proximate a substrate, wherein the substrate further defines the vacuum cavity; locating a film between the substrate and at least one of the first and second rolls of the apparatus; drawing a vacuum through the vacuum port in the apparatus, wherein a negative pressure is provided in the vacuum cavity of the apparatus, wherein the first and second rolls are drawn towards the substrate; and moving the apparatus along a substrate in a lamination direction.

In another aspect, the present invention provides a method of laminating at least two continuous webs together by providing an apparatus according to the present invention; threading a first web and a second web through a first nip in the apparatus; drawing a vacuum through a vacuum port in the apparatus, wherein a negative pressure is provided in the vacuum cavity, and wherein the upper first roll and the lower first roll forming the first nip drawn towards each other, whereby a lamination pressure is provided at the first nip; and moving the first and second webs through the first nip.

Another aspect of the present invention is a method of saving labor of adhering an adhesive-coated film to a substrate, comprising (a) distributing film to a party that has been taught to use the applicator of the present invention and the method of the present invention; (b) optionally permitting such party to print an image on the film; and (c) permitting such party to use the applicator and method to adhere the film to a surface of the substrate.

A feature of the apparatus used in the system of the present invention is the laminator utilizes a partial vacuum, also known as negative pressure, in a vacuum cavity of the laminator to generate pressure on the laminator at the interface between the laminator and the substrate where a film is subsequently laminated. The resulting lamination pressure is essentially uniform across the lamination area because the negative pressures within the vacuum cavity are substantially equal.

When used to laminate, e.g., two or more films to each other, one advantage of the system of the present invention is that, by relying at least partially on vacuum to generate lamination pressure, significant lamination pressures can be obtained without relying on the massive structures typically associated with pressure lamination equipment.

When used to apply graphic images and other films to, e.g., trucks, other vehicles, sign surfaces, buildings, etc., one advantage of the system of the present invention is labor savings of such significance that the overall total cost of an image graphic film applied to a large vertical or horizontal substrate, especially one having multiple compound or irregular surfaces can be substantially reduced. Furthermore, the quality of application is significantly improved, and often, lower adhesion adhesives can be used which reduce graphic removal time. Even with the cost of film remaining constant, the labor savings reduces the total cost of application of the film by as much as 80% and reduces the total cost of the applied film on a truck trailer by as much as 40%.

Heating of the film in conjunction with the use of vacuum as described herein may improve the conformability of the film around irregular or compound-curved surfaces, such that less aggressive adhesives can be used. These adhesives, often called removable or changeable adhesives, can save 80% of the time normally associated with removal of the graphic films. This can further cut the total cost of installed and removed applied films by as much as 60%.

With these substantial labor savings according to the present invention, one company can provide an entire product of both film goods and installation/removal services at a price considerable less than currently offered where the producer of the film goods and the installer of the film goods are unrelated companies. Another advantage of the invention is that large sheets of film can be laminated to surfaces at high productivity of speed and assured lamination. Another advantage of the invention is that the apparatus and methods are effective on both fabric-sided trucks and metallicsided trucks, making one technique versatile for a graphics film installer. The fabric and the metal can both flex under the partial vacuum applied by the laminator of the present invention, improving the uniformity of the lamination pressure. Another advantage of the invention is that the laminator can provide nearly 100% wetting area of the adhesive against the surface of the substrate whereas conventional squeegee usage can only achieve about 80% wetting. The use of a partial vacuum uses the power of a fluid to apply equal pressure at every point of contact of the film to the surface, something that is extremely difficult, if not impossible, to achieve when applying pressure with a device such as a squeegee. That advantage is even more apparent with surfaces that are filled with irregularities or compound curves or both.

As used in connection with the present invention, the term "vacuum" is used to describe reduced or negative pressure as compared to ambient pressure. The term does not require that an absolute or extremely negative pressure vacuum be drawn or maintained, although in some instances it may be possible and/or desirable to achieve large negative pressures in connection with the present invention.

In a preferred embodiment of the present invention a steered vacuum-assisted laminating apparatus and corresponding method is provided. This apparatus includes a vacuum assisted laminator as used in the system of the present invention for applying large format films to substrates where lamination pressure is generated at least partially by a vacuum drawn in a vacuum cavity. Advantages of the apparatus and methods include the ability to accurately apply films on a substrate using a vacuum-assisted laminator.

Even when applied with a vacuum-assisted laminator, accurate alignment of the laminator relative to the substrate to which a film is to be applied is important. The preferred embodiment of a laminating apparatus of the system of the present invention provides steering systems that can be used to control the vertical position the laminator, distance between the laminator and the substrate, and can also move the laminator along the substrate in a desired direction.

The laminating apparatus may further include a steering system for guiding the laminator over the substrate, the steering system including a vertical control mechanism maintaining a selected vertical position of the laminator relative to a reference line, and a vehicle moving the laminator along the substrate in a travel direction.

In another preferred embodiment a method of laminating a film to a substrate is provided, comprising providing a steered vacuum-assisted laminating apparatus including a laminator and a steering system; locating a film between the substrate and at least one of the first and second rolls; drawing a vacuum in the vacuum cavity formed by the seal mechanism and the first and second laminating rolls, wherein the first and second laminating rolls are drawn against the substrate; and moving the laminator along the substrate in a travel direction while maintaining the laminator in a selected vertical position relative to a reference line, wherein the film is laminated to the substrate

The laminating apparatus may also include means for guiding the laminator over the substrate, the means for guiding including means for maintaining a selected vertical position of the laminator relative to a reference line; and means for moving the laminator along the substrate in a travel direction.

In the following preferred embodiments of the invention will be described with reference to the drawings in which:

Fig. 1 is a schematic drawing of a method of applying graphics to a plurality of vehicles according to the present invention.

Fig. 2 is a diagrammatic front view of one lamination apparatus of the system of the present invention.

Fig. 3 is a diagrammatic cross-sectional view of the apparatus of Fig. 2 along lines 2-2 in Fig. 2.

Fig. 4 is a diagrammatic side view of one use of a lamination apparatus of the system of the present invention.

Fig. 5 is a diagrammatic side view of another use of a lamination apparatus of the system of the present invention.

Fig. 6 is a diagrammatic side view of another lamination apparatus according to the present invention.

Fig. 7 is a diagrammatic side view of another lamination apparatus according to the present invention.

Fig. 8 is a schematic block diagram of one steered laminating apparatus according to the preferred embodiment of the apparatus of the system of the present invention.

Fig. 9 is a schematic block diagram of another steered laminating apparatus according to the preferred embodiment of the apparatus of the system of present invention.

Fig. 10 is a view of a steered laminating apparatus according to the preferred embodiment of the apparatus of the system of present invention.

Fig. 11 is a perspective view of the steered laminating apparatus of Figure 10.

Fig. 12 is a schematic diagram illustrating biasing of a laminator towards a substrate.

Figs. 13 and 14 depict alternative mechanisms for guiding a vehicle along the substrate and/or maintaining the selected distance $d$ between the laminator and the substrate.

As noted above, graphics to be applied to a plurality of vehicles, such as in a fleet of trucks, trailers, delivery vans, official cars, and the like may be complex and difficult to apply in a uniform manner. With the increased importance in corporate identity due to corporate acquisitions, mergers, take-overs, and image changes, a rapid and uniform conversion of film graphics is important to minimize consumer confusion and to deliver a consistent message in a rapid manner. Further, vehicles are increasingly functional as "moving billboards," providing multiple advertising impressions as they traverse streets and highways. The desire to provide fresh new images and to be a part of the latest advertising campaign imparts increasing urgency to provide new and quickly changed graphics to vehicles.

In the past, it has been common to send applicator crews to the location of the vehicles in the fleet for one-by-one application of such film graphics by hand. This system creates numerous problems in the industry. First, the crew must locate the vehicle (frequently a truck trailer) to which the film graphic is to be applied. The vehicle is often in transit in its ordinary operation, and may be difficult to physically locate. Once located, the graphic must be applied at the location using whatever facilities may be available. The graphic often is applied on site in a parking lot or other open location, where weather may be an issue in the application process. Rain or cold temperatures create challenging application situations in this system and may adversely affect the appearance or performance of the applied graphic.

Surprisingly, it has been found that great cost reductions and efficiencies of image delivery can be obtained by establishing a network of Application Centers for applying film graphics to such fleet applications. This new method of doing business in the graphics industry provides significant advantages over the manner in which this business was previously carried out. Among the benefits of the present method that may be obtained include shared film application and removal techniques, familiarity with specific products and applications common with the entire fleet, rapid and virtually simultaneous deployment of the film graphic throughout the affected geographic area, uniformity in graphics quality and application "look," an enclosed, controlled environment for application to avoid rain and cold, limited interference with the commerce of the graphics customer, and the ability to employ capital or research intensive technology and equipment due to increased volume of specific projects. Further benefit could be taken from the labor savings afforded by the applicators and methods of the system of the present invention.

For purposes of the present invention, "coordinated graphics" are color patterns, images, or indicia that are provided using film graphics on a plurality of vehicles to provide a unitary image or message to be delivered by the plurality of vehicles. For example, a fleet of delivery trucks may be provided with graphics in a color pattern that serves an indicia that the vehicles are all owned or operated by a single delivery service company. As another example, a number of pizza delivery cars may be provided with an indicia of a corporate logo on the doors of the vehicles. To be a set of coordinated graphics, the size or design need not be exact duplicates in all of the vehicles. Adjustments in size to fit the specific vehicle, or differences in color or specific message for each vehicle may be desired or required by the party for which the graphics are being created. Nevertheless, if multiple vehicles are to be provided with graphics from a single customer to provide a decoration or advertisement function, these graphics are considered to be "coordinated graphics." Additionally, coordinated graphics according to the present invention may constitute film graphics that may or may not be printed with an image. The distinctive color of a film graphic, the design of different pieces of colored film graphics, or the arrangement of the film graphic on the vehicle may impart sufficient distinctness to provide the desired element of decoration or advertisement function such that no additional image on the film graphic need be present.

The "Graphic Coordination Center" as used herein is an entity that performs the coordination function of matching film graphics to an Application Center where a vehicle is to have film graphics applied thereto. As discussed below, the Graphic Coordination Center may perform other logistics operations as well.

An "Application Center" as used herein is a facility that has been preapproved by the Graphic Coordination Center as a place where film graphics may be applied to vehicles. The Application Center preferably provides a controlled environment facility that is staffed by persons having skill in the art of applying graphic film to vehicles. Preferably, the Application Center is provided with tools for application of film graphics, for example an apparatus for laminating films using a vacuum to generate a laminating force thereby using a method for laminating films. Most preferably the Application Center is provided with automated tools for application of film graphics. Such tools may be owned by the Application Center entity, or on loan or leased from another entity such as the Graphic Coordination Center.

A "Printer" as used herein is a facility that can impart an image to a film graphic by any appropriate printing step. Examples of printing techniques include electrostatic printing, ink jet printing, thermal transfer printing, screen printing and the like.

In one aspect of the present invention, a full service graphics maintenance program may be provided. In such a program, the graphics may be designed, applied, monitored (including inspections), maintained, and removed as a full service for the vehicle owner.

The service provided to the vehicle owner may include refurbishing or reconditioning the graphic, detailing the vehicle to provide good overall appearance, and the addition of conspicuity markings for safety purposes. In addition to providing film graphics, the films used may be applied as a replacement for paint on the vehicle.

In another aspect of the present invention, a full service graphic space lease program may be provided. For a graphic space leasing program to be effective, an ability to provide rapid change-overs in graphics designs on trailers or other appropriate vehicles with minimal impact on the commercial use of the vehicles is desired. The present invention provides a system for such a program. A preferred system supports short term advertising programs, such as 3 to 6 months in duration.

As part of either the maintenance or the lease programs described above, the preferred method of the present invention includes complete logistics management service for locating and scheduling materials and vehicles. Thus, a centralized coordination of location and printing of graphics is provided, preferably by computer-based tracking systems. Additionally, the location and availability of the vehicles to which graphics are to be applied is also preferably centrally coordinated. Thus, the owner of the vehicles can provide the application coordinating system with information of the location, scheduling, and availability of the vehicle for application of the film graphic. Alternatively and preferably, the Graphic Coordination Center may place tracking devices on the vehicles, or utilize tracking devices already installed on the vehicles, to monitor the location of the vehicles as a service to the owners. Such tracking devices include GPS devices, radio-transmitters, or other appropriate devices. In such a circumstance, as the vehicle is physically proximate to an Application Center, the Application Coordinating System may call the driver of the vehicle to schedule an appointment for graphic change or maintenance.

The Graphic Coordination Center also preferably tracks availability of Application Centers, to assure that they have space and resources available for application of graphics to the vehicle. Preferably, all three variables, the availability of the graphic, the vehicle and the Application Center, are coordinated by a computer system utilized by the Graphic Coordination Center. Finally, an appropriate system of billing may also be provided, whereby the owner of the vehicle is charged for the graphic or credited for use of the display space. In the case of leased space, the graphic image customer is charged for the value of the image impressions. A system of revenue sharing with Application Centers and/or Printers, when not owned by the Graphics Coordination Center entity, may also be established.

The Application Centers of the present invention are business locations that the practitioner of the present invention identifies as having sufficient skill, reliability, expertise and equipment to carry out the required film graphics application. The Application Centers may be a part of the company of the practitioner, a subsidiary of the practitioner, or in a contractual relationship of some kind with the practitioner. Preferably, the Application Centers are located in various regions of the market area, so that every vehicle of a widely located fleet of a customer may conveniently visit a center without significant travel time out of its usual travel pattern. Preferably no vehicle in the fleet need travel more than 4 hours, and more preferably no more than 2 hours beyond its usual travel pattern most, preferably no more than 1 hour.

In a preferred embodiment of the method of the present invention, the imaged film graphic is imaged by a Printer at a central location or selected central locations and shipped to the Application Centers. This embodiment provides the advantage of a single source of the imaged film graphic material, thereby simplifying quality assurance and uniformity of the film graphics throughout the regions of application.

Alternatively, the imaged film graphic may be imaged by Printers at locations proximate to the preselected Application Centers. Thus, the instructions for creation of the image may be transmitted by computer or other means (e.g. over phone lines or over the Internet) from a central source to numerous printers that are proximate the Application Centers, followed by transport of the imaged graphic from the printer to the Application Center using a convenient transportation mode. By "proximate" is meant that the printer, while not necessarily being on the same physical site as the Application Center, is physically close to the Application Center and the imaged film graphic may be physically transported by hand, car or other convenient conveyance in a matter of minutes or hours, preferably within 4 hours.

In yet another alternative, the imaged film graphic may be imaged at said preselected Application Centers. In other words, the actual physical location of the Application Center may be equipped with a printer capacity to allow generation of the imaged film graphic on site, with immediate application to the vehicle being possible.

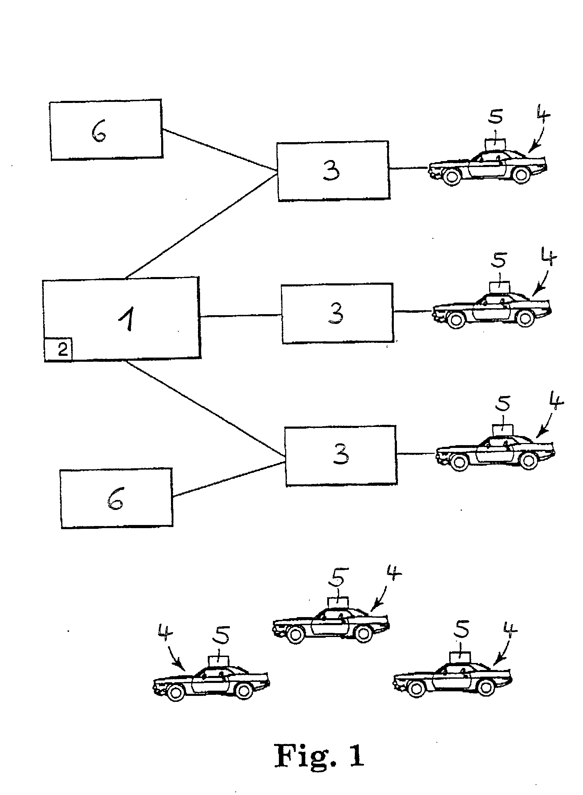

Turning now to the drawing, Fig. 1 is a schematic drawing of a method of applying graphics to a plurality of vehicles according to the present invention. Graphics Coordination Center 1 is optionally provided with computer based tracking system 2 for coordinating availability of Application Centers 3 and/or the location and availability of vehicles 4. To assist in locating vehicles 4, selected vehicles have position tracking devices 5 installed thereon. Imaged film graphics (not shown) may optionally be provided from central printer 6.

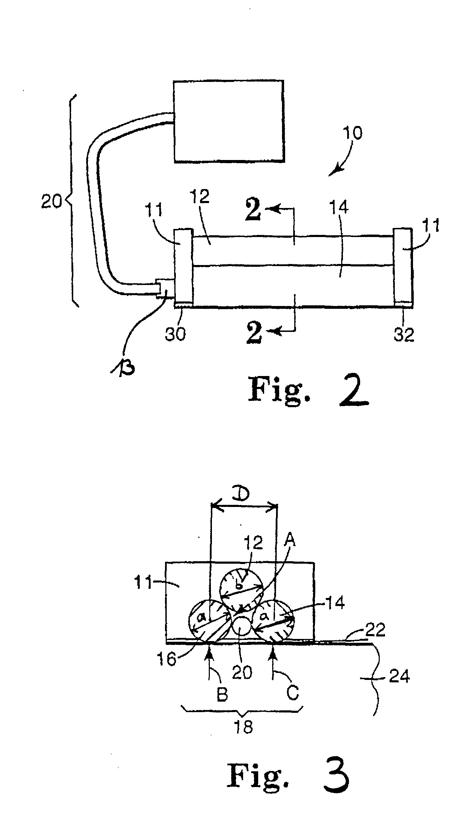

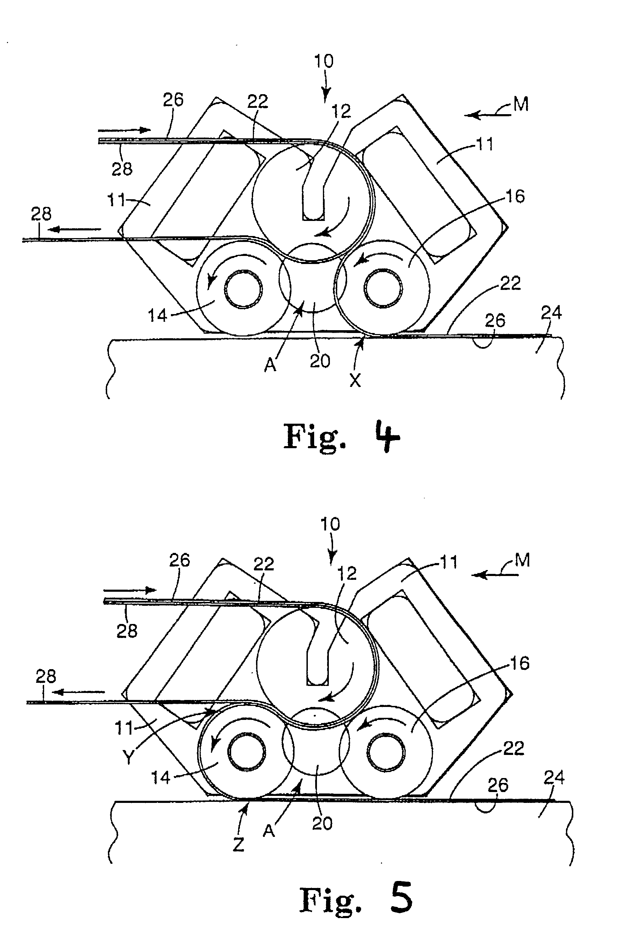

The predetermined film graphic is applied to the predetermined vehicle by any techniques appropriate for such application. Therefore the system of the present invention provides an apparatus and methods which use vacuum to generate a laminating force. Figs. 2 and 3 show one lamination apparatus 10 having a frame 11. At least one end of the frame 11 includes a vacuum port 13 in fluid communication with a vacuum cavity A formed in between the rolls 12, 14, and 16. The rolls 12, 14, and 16 combine to defined the vacuum cavity A and to provide lamination pressure on a film. The rolls 12, 14 and 16 are preferably circular and rotate about longitudinal axes extending through their centers. The longitudinal axes of the rolls are generally parallel to each other.

The lamination apparatus 10 may also include a vacuum or negative pressure source 20 that generates a partial vacuum (negative pressure) within the vacuum cavity A. That vacuum draws the outer rolls 14 and 16 against film 22 and the substrate 24 to provide the desired lamination pressure.

The substrate 24 on which the outer rolls 14 and 16 are mounted may be flat, or it may be curved such as, e.g., a roll. Furthermore, substrate 24 may be another film located on a flat or curved surface and to which the film 22 is to be laminated. In other applications, the substrate may be flexible, but under tension such as, e.g., a fabric surface used on a truck trailer.

Although the illustrative embodiments depicted herein rely on sealing rolls, the seal mechanisms used in the laminating apparatus of the present invention could alternatively be replaced with multiple rolls or a hard shell with vacuum seals against the outer rolls 14 and 16.

As seen in Fig. 4, the film 22 may include, e. g., a coating of a pressure sensitive or pressure activated adhesive 26 protected by a liner 28. The lamination apparatus 10 greatly aids in the lamination of, e.g., pressure sensitive adhesive coated films to surfaces such as truck sides, signs, etc. As discussed below, the system of the present invention also provides vacuum-assisted lamination apparatus and methods that can be used to laminate two sheets or films together in continuous web processes.

The outer rolls 14 and 16 of the laminator 10 are provided to seal against a substrate surface 24 as well as to provide the desired lamination pressure along those nip points. One of the outer rolls 14 and 16 may be harder or less conformable that the other to improve lamination. One or both of the nips formed between the outer rolls 14 and 16 may also include a film 22 being laminated to the substrate surface 24. The sealing roll 12 is provided to define and seal the vacuum cavity A between the outer rolls 14 and 16. The sealing roll 12 forms a rolling seal with each of the outer rolls 14 and 16. The sealing roll 12 may also provide a nip point at which a liner or other layer can be stripped from a film before it is laminated to the substrate surface 24.

It may be desirable that at least a portion of the sealing roll 12 be transparent, such that the vacuum cavity A can be visually monitored during lamination. In some instances, the transparent portion may extend over the length of the roll 12, and in other instances, only a portion of the length may be transparent.

Referring to Fig. 3, the force of negative pressure from source 20 (see Figure 2) generates a partial vacuum within vacuum cavity A between the rolls 12, 14, and 16 and the substrate 24. Subatmospheric pressure within the vacuum cavity A, compared with ambient pressure outside of vacuum cavity A then draws the rolls 12, 14, and 16 and the surface 24 together, thus creating pressure on the surface of rolls 14 and 16 in contact with the substrate surface at contact interfaces B and C.

The pressure distributed over the length of the rolls is at least partially dependent on (1) the distance between interfaces B and C times the length of laminator 18, (2) the negative pressures that can be obtained in the vacuum cavity A. For example, the lamination pressure at interfaces B and C may be about 175 Newtons/m (1 lbs./in) or more, more preferably about 250 Newtons/m or more. In some instances, it may be desirable to achieve pressures of about 1000 Newtons/m or more, even more desirably, about 2000 Newtons/m or more, and still more desirably about 3000 Newtons/m or more.

The upper pressure limit will depend on a variety of factors such as the strength of the components used in the lamination apparatus 10, the capabilities of the vacuum source, the strength of the surface 24 to which films are being laminated, etc. In some instances it may be desirable to provide a pressure relief device or devices to relieve excessive pressures before the lamination force becomes too great. Pressures in excess of 4500 Newtons/m are possible with 30 cm roll spacing and only 30% air evacuation in the vacuum cavity.

A set of rolls 12, 14, and 16 that are each 137 cm (about 54 inches) long with a distance of 20.3 cm (8 inches) between interfaces B and C and a standard shop vacuum as source 20 that generates 27.4kPa could apply 3818 Newtons per roll or 2,783 Newtons/m (858 lbs./roll or 15.89 lbs/lineal in./roll) of force to each of the two rolls 14 and 16 at each of interfaces B and C. Using conventional frames and mounting systems, it would be very difficult to apply that much pressure to the rolls without either deflecting the rolls or the substrate surface. Such a frame would also be massive, very heavy, and very difficult to handle by persons skilled in the art, especially against a vertical surface.

Optionally but preferably, Fig. 2 shows conformable seals 30 and 32 on frame 11 to assist in the formation of negative pressure within the vacuum cavity A in the two directions orthogonal to interfaces B and C.

Because vacuum is used to supply the lamination forces and the negative pressure is distributed substantially equally over the surfaces of the rolls 12, 14, and 16, relatively insubstantial roll structures are required for rolls 12, 14, and 16. In many instances, the roll structures may include hollow cores. Those lightweight structures can be contrasted with the massive metal rolls that would otherwise be required for positive pressure lamination using rolls to limit undesirable roll deflection near the middle of the rolls. The rolls used in the lamination apparatus of the system of the present invention may, in some instances, weigh less than one-tenth of the conventional metallic rolls needed to apply over 3800 Newtons of force with a similar length device.

The rolls used in the apparatus and methods of the present invention may preferably include outer surfaces that are soft enough to conform to the substrate surface. The use of conformable rolls may improve sealing at the nip points between the rolls, which can assist in the generation and maintenance of desirable negative pressure levels in the vacuum cavity. The conformability may also be useful to improve contact between the rolls and films being laminated when confronting irregularities or compound curves on the surface. Thus, if the substrate surface contains raised or lower areas, such as rivets or dents, soft rolls are desired to insure complete compliance of the film with the substrate surface. A soft rubber roll with a high coefficient of friction to the pressure sensitive film works very well on riveted surfaces. Another possible roll composition is foam rubber. Furthermore, it has been found that an intimate contact of the film to the roll at the interface of application to the substrate helps prevent wrinkling from occurring when applied over rivets and on irregular surfaces. A high degree of wrap also aids in supporting the film.

Presently preferred for surfaces containing irregularities is a soft rubber roll having a Shore Scale hardness of from about Shore 00 10 to about Shore A 60, more preferably from about Shore 00 30 to about Shore A 30. If the substrate does not contain irregularities, harder roll surfaces (e.g., metallic surfaces) may be used and can potentially develop higher pressures as compared to softer rolls.

The diameters of the rolls 12, 14, and 16 can vary depending on a number of factors such as the lamination pressures desired, the length of the rolls, etc. It may be desirable that the relative diameters of the rolls possess certain relationships. For example, it may be desirable that the outer rolls 14 and 16 have substantially equal diameters. It may also be preferred that the sealing roll 12 located between both outer rolls 14 and 16 have a larger diameter than the outer rolls 14 and 16 to increase the spacing between the outer rolls 14 and 16 without making all of the rolls larger. In some instances, the distance (D) between the centers of the outer rolls 14 and 16 (Fig. 3) may be determined by the following equation:

$$D = \sqrt{(2ab + a^2)}$$

where a is the diameter of each of the outer rolls 14 and 16 (which are the same) and b is the diameter of the sealing roll 12 to reduce or prevent the rolls from bending when a vacuum is drawn in the vacuum cavity A.

In some instances, such as the application of polymeric films carrying graphic images to, e.g., truck trailers, the rolls 14 and 16 may have diameters ranging from about 4 cm to about 23 cm, preferably from about 5 cm to about 13 cm.

It may be desirable that the size and construction of the rolls 12, 14, and 16 be such that, during lamination, the outer rolls 14 and 16 deflect or bow inwardly towards each other. Alternatively, it may be desirable if only the outer roll or rolls around which a film is wrapped deflect or bow inwardly. Such deflection may assist in reducing wrinkles in the lamination process by, in effect, spreading the film outwardly from the center of the deflected rolls. The deflection may be controlled by varying the tension on the film or films wrapped around the deflected roll or rolls. The deflection may also be controlled by varying the negative pressure in the vacuum cavity A, varying roll size, or varying spacing between outer rolls 14 and 16. In some instances, it may be desirable to use flexible rolls for laminating films on curved surfaces.

The applicator 10 can be mounted on horizontal or vertical rails or any other suitable structure for wide webs (greater than about 60 cm) or can be hand held or mounted on a hand held pole for narrow webs (less than about 30 cm). Therefore, the width of the applicator 10 can be varied according to the needs of those skilled in the art and can be used to adhere films ranging from wallpaper to graphic marking film marketed by Minnesota Mining and Manufacturing Company (3M) of St. Paul, MN, USA under the brands of Controltac™ and Scotchcal™ films.

Fig. 4 shows one use of the laminator 10 of the system of the present invention. A laminate of film 22, adhesive 26, and liner 28 (protecting adhesive 26) are threaded between sealing roll 12 and roll 16 and separate between roll 12 and roll 16, with liner 28 following the circumference of roll 12 to roll 14 and the adhesive-coated film 22 following the circumference of roll 16 to a point of contact with substrate 24, indicated as interface X within vacuum cavity A. Within vacuum cavity A, the outer roll 16 forces the adhesive 26 on film 22 against substrate 24 at interface X as rolls 14 and 16 rotate counterclockwise and sealing roll 12 rotates clockwise (as shown with appropriate arrows) and interface X advances in the direction of motion M.

Fig. 5 shows another threading of film/liner laminate, where film 22, adhesive 26, and liner 28 enter the laminator 10 between roll 12 and roll 16 from the direction toward which applicator 10 moves (motion M). Thus the laminate of film 22 and liner 28 contacts the circumference of sealing roll 12, but the point of delamination occurs at point Y between roll 12 and roll 14 with liner 28 returning the same direction as motion M. In this embodiment, the film 22 first contacts substrate 24 outside of vacuum cavity A but is forced against the substrate 24 by outer roll 14 at interface Z once motion M causes film 22 to enter vacuum cavity A. Outer roll 16 also provides a laminating force against the film 22 and substrate 24.

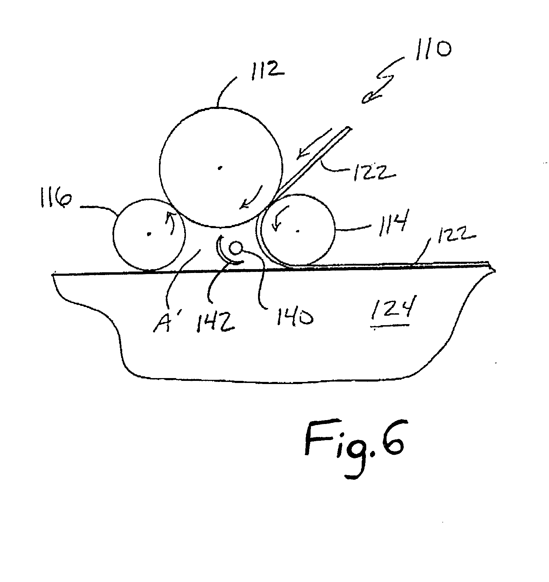

To improve lamination, one or both of the outer rolls 14 and 16 could also be heated. Referring to Figure 6, in another alternative, a heating device may be positioned either outside of the laminator 110 to heat a film before it enters the vacuum cavity A' or, as illustrated in Figure 6, a heating device 140 may be located within vacuum cavity A' to heat the film 122. The heating device 140 may include a heat shield to at least partially control the direction in which thermal energy travels. Examples of suitable heating devices include, but are not limited to: infrared heaters, resistance heaters, carbon filaments, quartz irradiators, etc. If the heat is applied while the film is outside the vacuum cavity, e.g., before entering or after exiting the vacuum chamber, hot air may be used.

The laminators of the system of the present invention could ride on a mounting frame or otherwise conveyed across the surface of the substrate. Furthermore, the substrate surface is drawn toward the rolls so any uneven or flexible film is easier to use with the applicator of the present invention than with a pressure system.

Laminators of the system of the present invention permit one skilled in the art to apply film 22 in subatmospheric pressure (Fig. 4) or atmospheric pressure (Fig. 5) using vacuum-assisted lamination pressures to quickly and assuredly adhere the film 22 against the substrate 24 even if such substrate 24 has surface aberrations, compound curves, or irregularities compared with a flat surface. The substrate can be aligned vertically or horizontally. The apparatus can traverse in any desired direction, e.g., horizontally, vertically, etc. Alternatively, the apparatus may remain stationary while the substrate moves.

Furthermore, the lamination pressures that can be achieved are not reliant on the forces used to move the laminator into position against a surface. For example, the lamination apparatus may be held on an extend pole above the head of, e.g., an operator. After a vacuum is drawn in the vacuum cavity, the laminator can supply the desired lamination forces independent of the forces provided by the operator on, e.g., the outer frame of the device. In another example, the lamination apparatus may be suspended on ropes, cables, or other structures that move it into position over a substrate. Activation of the vacuum source can then draw the laminator against the substrate to provide the desired lamination pressures.

Any adhesive-coated film can benefit from the applicator of the present invention, e.g., heat activated adhesives can be used in conjunction with heat. Nonlimiting examples of such films include any film presently sold by Minnesota Mining and Manufacturing Company (3M) of St. Paul, MN, USA under the brands of Scotchcal™; Controltac™ and the like.

It has been found that an adhesive-coated film, namely: Controltac™ 180 film can be successfully adhered using the applicator of thesystem of the present invention. It has also been found that as much as 80% of the time normally required for adhering a typical graphic marking film can be saved, reducing the total cost of adhering such film by as much as 40%.

The vacuum assist applicator of the present invention can also be used to "finish" a pressure sensitive film that is lightly adhered to a surface, in which case it would not pass between the rolls, but the rolls would only apply high pressure.

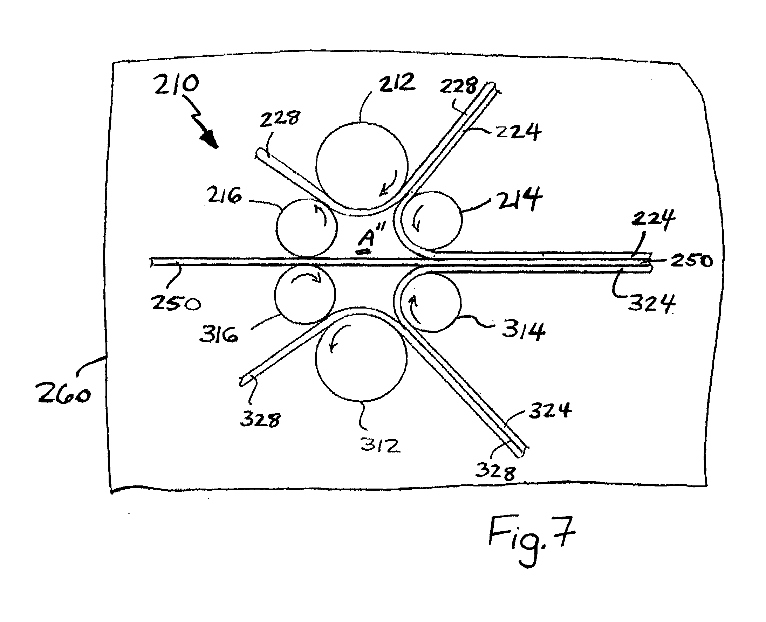

Yet another lamination apparatus and method according to the present invention is illustrated in Figure 7. This apparatus 210 may be particularly useful in continuous web processes for laminating two or more continuous webs to each other. By "continuous," it is meant that the webs being laminated have a length that is substantially longer than the distance between the outermost rolls used to supply the lamination pressure.

The apparatus 210 will be described using the terms "upper" and "lower" for reference purposes only. It should be understood that the apparatus 210 may be used in any desired orientation and that the terms used to describe the relative positions for the components should not be construed as limiting.

Turning to Figure 7, the apparatus 210 includes upper outer rolls 214 and 216 and an upper sealing roll 212 in an orientation relative to each other that is similar to the rolls 12, 14 and 16 in apparatus 10 described above. The apparatus 210 also includes lower outer rolls 314 and 316 and a lower sealing roll 312. All of the rolls are preferably oriented generally parallel to each other. The outer rolls 214 and 314 form a first nip between them and the outer rolls 216 and 316 form a second nip. The nips formed by the respective pairs of outer rolls are spaced apart. Together, the rolls combine to define a vacuum cavity A" in which a negative pressure can be maintained.

Pressure at the nips formed by the outer rolls can also be provided by enclosing the rolls in a pressurized chamber 260, with each of the webs entering the chamber through sealed openings or being contained entirely within the enclosure. In this embodiment, the cavity A" can be maintained at atmospheric pressure or it can still be evacuated to further increase the nip pressure.

The upper outer rolls 214 and 216 are preferably mounted separately from the lower outer rolls 314 and 316 so that, when a negative pressure is provided in the vacuum cavity A", the upper outer rolls 214 and 216 are drawn against their respective lower outer rolls 314 and 316, thereby providing the desired lamination pressure at the nips between the pairs of outer rolls. The apparatus 210 can then provide varying lamination pressures developed at the nips between the upper and lower rolls depending on the level of the negative pressures in the vacuum cavity A".

Figure 7 illustrates a process in which a base continuous web 250 is moving through the apparatus 210 while an upper continuous web 224 and a lower continuous web 324 are laminated on opposing sides of the base web 250. Figure 7 also depicts liners 228 and 328 being removed from the webs 224 and 324, respectively. The lamination of three webs is depicted for illustrative purposes only. It will be understood that the apparatus may alternatively be used to laminate only two of the three webs together or it may be used to laminate even more than three webs together. Additional laminations that do not require liner removal can be made at, above and below the incoming web 250 between rolls 216 and 316. Furthermore, the apparatus 210 may be used for performing a pressure-based process on only one web, e.g., embossing a web with a desired pattern using one of the outer rolls. Heat may also be introduced through one or more of the rolls or indirectly with hot air, infrared radiation, etc.

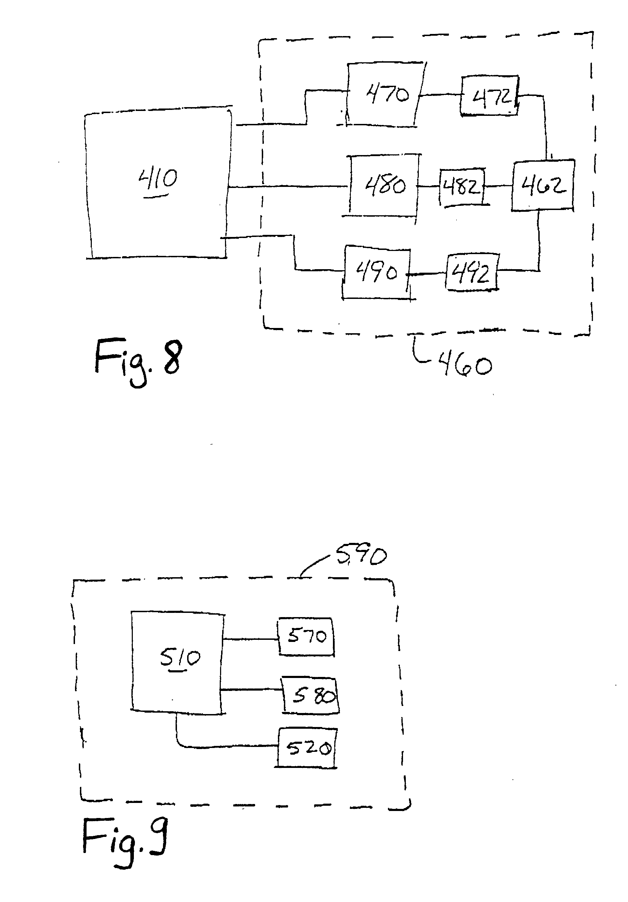

Figure 8 is a schematic block diagram of one embodiment of a steered vacuum-assisted laminating apparatus according to the apparatus of the system of the present invention. The apparatus includes a laminator 410 that may be constructed similar to the laminating devices described above in connection with, e.g., Figures 2 and 3. Briefly, however, the laminator 410 preferably includes spaced-apart laminating rolls and a seal mechanism forming a vacuum cavity as described in more detail above.

The laminator 410 is steered along a substrate during lamination of a film using a steering system 460. The illustrated steering system 460 may include a variety of components including, e.g., a vertical control mechanism 470 that can maintain the laminator 410 in a selected vertical position relative to a reference line 462. The steering system 460 may also optionally include a depth control mechanism 480 that can maintain the laminator 410 a selected depth from the substrate. The steering system 460 may also include a vehicle 490 that can move the laminator 410 along the substrate in a travel direction.

The reference line 462 may take a variety of forms but is preferably fixed or stationary relative to the substrate on which the film is to be applied. Typically, the reference line 462 will be straight and may take a variety of forms. Examples of some suitable reference lines 462 may include, but are not limited to, laser beams, features on the substrate (e.g., the edge of trailer wall), guide wires (buried or otherwise), mechanical guides (e.g., wires, bars, etc.) fixed relative to the substrate, etc. The use of a laser beam as a reference line 462 may include the use of a rotating laser beam that defines a reference plane as is well known in, e.g., the construction industry. Alternatively, a laser beam may be aligned parallel to the substrate, thereby defining a straight line relative to the substrate. Depending on its form, the reference line 462 may be detected mechanically (e.g., using limit switches), electrically (e.g., Hall effect sensors, RF sensors, etc.), optically (e.g., using photocells), or by any other suitable technique.

Referring again to Figure 8, the vertical control mechanism 470 may detect the reference line 462 using a sensor 472 that is selected based on the form of the reference line 462. Similarly, the depth control mechanism 480 may include a sensor 482 that can detect the reference line 462. This embodiment of a depth control mechanism 480 generally requires a reference line 462 that is located a fixed distance from the substrate. The vehicle 490 may also include a sensor 492 for detecting the reference line 462 to assist in moving the laminator 410 in the travel direction. In such an arrangement, it may be preferable that the reference line 462 be parallel to the travel direction. In some instances, at least a portion of the function of the depth control mechanism 480 can be provided by the vehicle 490 when the vehicle 490 is guided along the substrate at a fixed distance from the substrate. For example, the vehicle 490 can provide gross control over the depth between the laminator 410 and substrate, while the depth control mechanism provides fine control over the depth between the laminator 410 and substrate that complements the control provided by the vehicle 490.

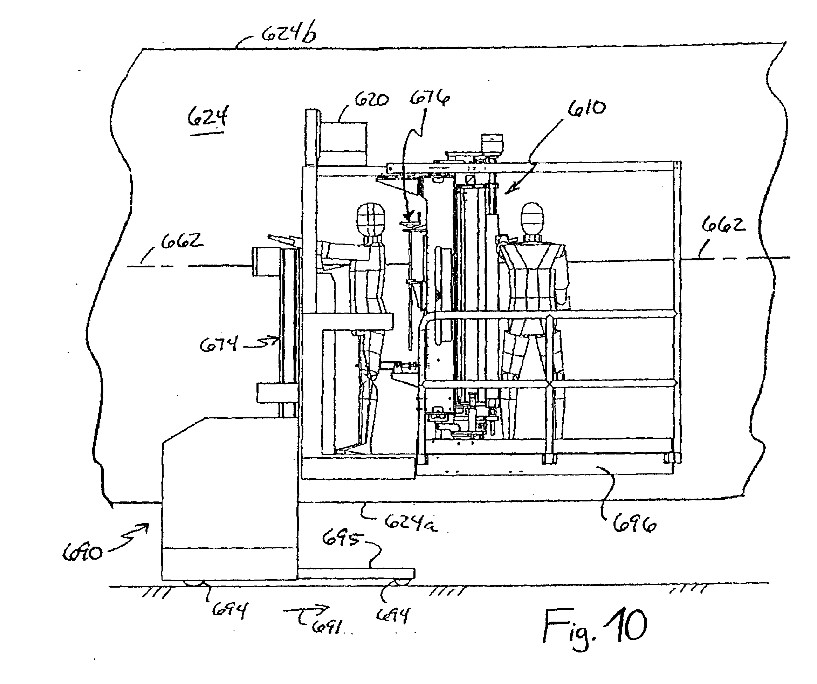

Figure 9 illustrates another illustrative embodiment of a steered vacuum-assisted laminating apparatus according to the present invention. The apparatus includes a laminator 510, vertical control mechanism 570, and optional depth control mechanism 580 all mounted on vehicle 590. Also optionally included in the apparatus is a vacuum source 520 in fluid communication with the laminator 510 to provide the desired vacuum used during laminating.

The travel control mechanism 590 may preferably be a self-contained vehicle, i.e., a vehicle that includes a motor and wheels, tracks, etc. that allow the vehicle 590 to move under its own power. It may be further preferred that the vehicle 590 be a guided vehicle that detects and moves along the substrate at a fixed distance therefrom. The guiding may rely on the reference line used by the vertical control mechanism 570 or it may rely on other reference systems. For example, a vertical reference line may be provided and detected by the vertical control mechanism to control the vertical position of the laminator 510 while a separate vehicle reference line may be provided and detected by the vehicle 590 to guide the vehicle 590 along the substrate.

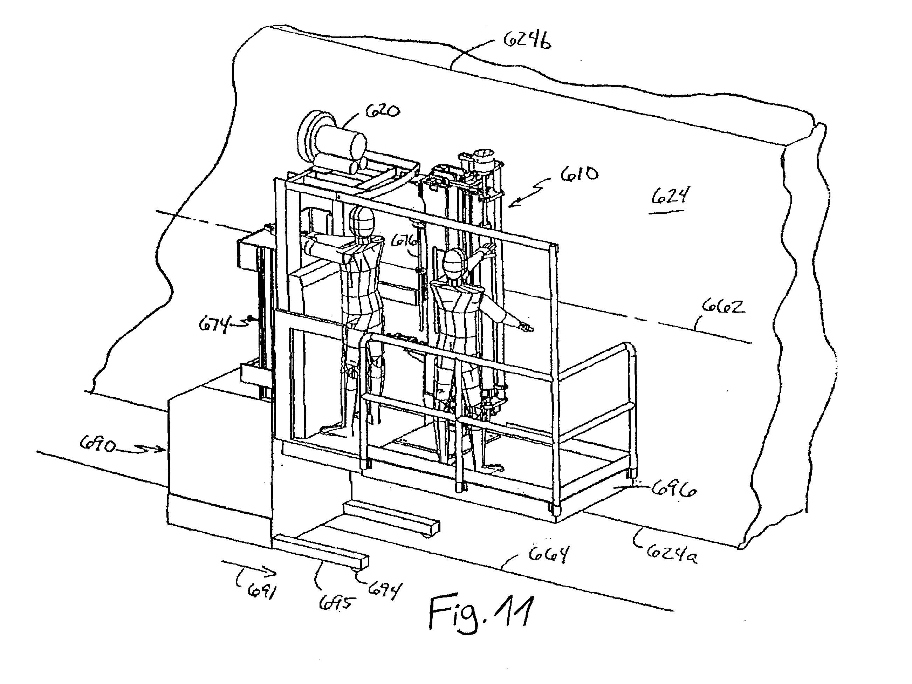

Figures 10 and 11 illustrate one embodiment of a steered laminating apparatus that includes a self-contained, guided vehicle 690. The vehicle 690 may, for example, be adapted from a commercially available vehicle. The depicted vehicle includes wheels 694 to move the vehicle 690 in the travel direction as indicated by arrow 691. By "self-contained" as used to describe the vehicle 690, it is meant that the vehicle 690 includes an on-board power source capable of providing power to the various systems mounted on the vehicle 690. For example, the vehicle 690 may include batteries, an internal combustion engine or engines, etc.

A laminator 610 is mounted on the vehicle 690 and is used to apply a film to substrate 624 using vacuum as described above. A reference line 662 is provided to assist with vertical positioning of the laminator 610 (and, ultimately, the film).

The apparatus of Figures 10 and 11 also includes a vertical control mechanism provided in two different components. A gross vertical adjustment mechanism 674 is provided to raise the upper deck 696 of vehicle 690 above the base 695 (which is, itself, supported by wheels 694). The gross vertical adjustment mechanism 674 may be provide in any suitable manner, e.g., hydraulic cylinders, scissors-lift, jack screws, etc. Regardless of the exact form, it is desired that the gross vertical adjustment 674 provide rough positioning of the laminator 610 relative to the reference line 662.

Once that rough positioning is accomplished, a fine vertical adjustment mechanism 676 may be provided to more precisely position the laminator 610 relative to the reference line 662. The fine vertical adjustment mechanism 676 may take a variety of forms, e.g., a screw, hydraulic cylinders, etc.

Also seen in Figure 10 is a vacuum source 620 mounted on the vehicle 690 for supplying vacuum to the laminator 610 during operation. The vacuum source 620 is preferably powered by the same energy source used to move the vehicle 690 in the travel direction 691.

Although the apparatus of Figures 10 and 11 is illustrated as relying on reference line 662 for vertical positioning, features such as the lower edge 624a or upper edge 624b of the substrate 624 could also be used for vertical positioning of the laminator 610 (assuming that such features can be correlated with the desired position of the film). In other alternatives, the floor, rails, or other structures supporting the vehicle 690 may be used for vertical positioning if they are suitably straight and/or level relative to the desired position of the laminator 610. Such features or structures may provide alternative forms of mechanical guides as used in connection with the present invention.

Figure 11 also depicts a separate vehicle reference line 664 along which the vehicle 690 is guided. The vehicle reference line 664 may be provided in the form of a guide wire as is commonly used in connection with guided vehicle systems (which can be detected by a sensor located on the vehicle 690). Alternatively, the vehicle reference line may be provided in the form of a mechanical guide, e.g., a rail or other physical structure along which the vehicle 690 travels. Where the vehicle reference line 664 is located a fixed distance from the substrate 624, it can be used to control the distance between the laminator 610 and the substrate 624.

As seen in Figure 11, the reference line 662 may preferably extend along the substrate 624 at a fixed distance therefrom (where the reference line appears as a point in Figure 10 which is taken parallel to the planar substrate 624). As a result, reference line 662 may also be used to control the distance between the laminator 610 and the substrate 624. The reference line 662 could also be used to guide the vehicle 690 along the substrate 624.

In addition to guiding the vehicle 690 to control the depth between the laminator 610 and the substrate 624, it may also be desirable to include one or more biasing mechanisms to force the laminator 610 towards the substrate 624. Biasing the laminator 610 towards the substrate 624 may provide an advantage in that, if the vacuum is lost, some pressure is maintained on the film being laminated to the substrate 624 until vacuum can be restored or the application process can be stopped.

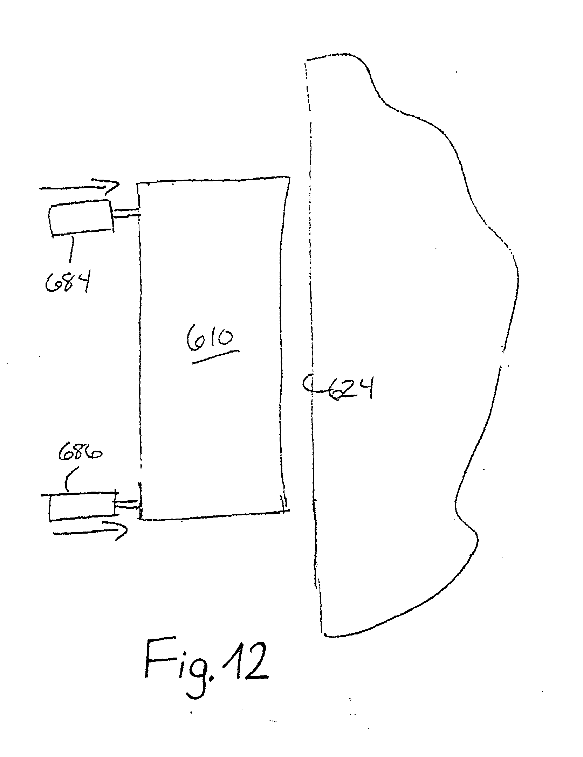

It may further be preferred to independently bias the upper and lower ends of the laminator 610 towards the substrate 624. By "independently," it is meant that the ends of the laminator 610 are free to move (within limits) without regard to the position of the opposing end of the laminator 610. As a result, the laminator 610 may be better able to maintain contact with a substrate 624 that may not be perfectly vertically aligned with, e. g., the vehicle 690. Referred to Figure 12, a schematic diagram of laminator 610 is depicted including an upper biasing mechanism 684 and a lower biasing mechanism 686. Each biasing mechanism acts to force the laminator 610 towards the substrate 624. The biasing mechanisms may be provided in any suitable form, e.g., hydraulic cylinders, spring mechanisms, inflatable bladders, solenoids, etc.

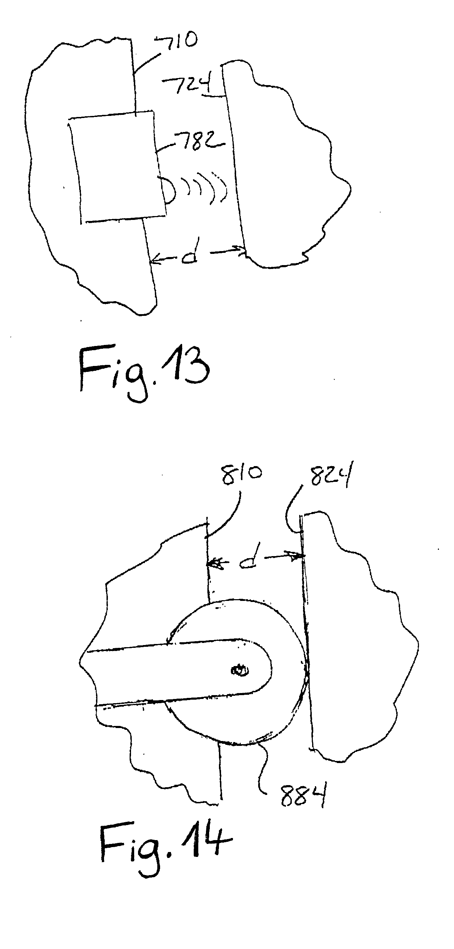

Figures 13 and 14 illustrate some alternative techniques and mechanisms for guiding a vehicle along the substrate and/or maintaining the selected distance *d* between the laminator and the substrate. In Figure 13, the laminator 710 includes, e.g., an ultrasonic, infrared, or other non-contact sensor 782 that detects the substrate 724. Alternatively, a contact sensor, e.g., mechanical limit switch, may be used to position the laminator 710 relative to the substrate 724. Actual positioning of the laminator 710 may be accomplished, e.g., by steering a vehicle on which the laminator 710 is mounted. Alternatively, the laminator 710 may be mounted on, e. g., slides, and moved towards or away from the substrate 724 by hydraulic cylinders, a jack screw, or any other suitable mechanism.

Figure 14 depicts a laminator 810 that includes a mechanical spacer to maintain a selected distance between the laminator 810 and substrate 824. The illustrated mechanical spacer is provided in the form of a wheel 884 that preferably rolls on the substrate 824, thereby establishing the selected distance *d* between the laminator 810 and substrate 824. Many different mechanical spacers will be known to those skilled in the art, e.g., slides, etc.

Instead of the above described apparatus and methods and preferred embodiments further application systems for the film are conceivable. Preferably, the film is applied at least in part using an automated process, such as a high speed mechanical application system. A preferred system would unwind graphic film material from a roll form. More preferably, the automated process includes automated delivery of the film, combined with application of pressure to adhere the film to the substrate.

When such systems are used, the conformability of the film around irregular or compound-curved surfaces is improved such that less aggressive adhesives can be used. These adhesives, often called removable or changeable adhesives, can save 80% of the time normally associated with removal of the graphic films. This can further cut the total cost of installed and removed applied films by as much as 60%.

With the substantial labor savings using the tools as described above, one company can provide an entire product of both film goods and installation/removal services at a price considerable less than currently offered where the producer of the film goods and the installer of the film goods are unrelated companies operating independently.

A preferred apparatus to assist in the application of adhesive-coated plastic films, particularly vinyl films, to vehicles includes the application of pressure using and automated rolling process. Some of the most common surfaces include truck sides, vehicles, etc. These large surfaces require extensive time and labor for application of films. This often adds more cost to the project that does the film itself. Furthermore, many of these applications are on surfaces that contain compound-curved protrusions or indentations such as channels or rivets or other irregularities that increase application time and often produce wrinkles.

The rolls used in such an apparatus may preferably include outer surfaces that are soft enough to conform to the substrate surface. Conformability improves contact between the rolls and films being laminated when confronting irregularities or compound curves on the surface. Thus, if the substrate surface contains raised or lower areas, such as rivets or dents, soft rolls are desired to insure complete compliance of the film with the substrate surface. A soft rubber roll with a high coefficient of friction to the pressure sensitive film works very well on riveted surfaces. Another possible roll composition is foam rubber. Furthermore, it has been found that an intimate contact of the film to the roll at the interface of application to the substrate helps prevent wrinkling from occurring when applied over rivets and on irregular surfaces. A high degree of wrap also aids in supporting the film.

Presently preferred for surfaces containing irregularities is a soft rubber roll having a Shore Scale hardness of from about Shore 00 10 to about Shore A 60, more preferably from about Shore 00 30 to about Shore A 30. If the substrate does not contain irregularities, harder roll surfaces (e.g., metallic surfaces) may be used and can potentially develop higher pressures as compared to softer rolls.

A pressure applicator, and particularly a vacuum assist applicator as described above can also be used to "finish" a pressure sensitive film that is lightly adhered to a surface, in which case it would not pass between the rolls, but the rolls would only apply high pressure.

The preceding specific embodiments are illustrative of the practice of the invention. This invention may be suitably practiced in the absence of any element or item not specifically described in this document. The complete disclosures of all patents, patent applications, and publications are incorporated into this document by reference as if individually incorporated in total.

Various modifications and alterations of this invention will become apparent to those skilled in the art without departing from the scope of this invention, and it should be understood that this invention is not to be unduly limited to illustrative embodiments set forth herein, but is to be controlled by the limitations set forth in the claims.

**Claims**

1. A method of applying coordinated graphics to a plurality of vehicles located in remote locations with respect to each other, comprising:

   a) establishing a Graphics Coordination Center;
   b) establishing Application Centers preapproved by said Graphics Coordination Center for applying film graphics at various locations;
   c) dispatching predetermined vehicles of the plurality of vehicles to be provided with film graphics to preselected Application Centers;
   d) applying a predetermined film graphic to the predetermined vehicle; and further comprising at least one of the following steps:
   e) providing logistics management support for locating and scheduling vehicles for application of film graphics thereto by said Graphics Coordination Center;
   f) providing logistics management support for location and printing of film graphics by said Graphics Coordination Center;
   g) providing logistics management support for availability of the Application Center for application of film graphics to a vehicle by said Graphics Coordination Center; and/or
   h) providing an apparatus for laminating films.

2. The method of claim 1, wherein said Application Centers have been provided with automated tools for application of said film graphics.

3. The method of claim 1 or 2, wherein said logistics management is provided by a computer-based tracking system and/or installing position tracking devices on said vehicles.

4. The method of any of claims 1 to 3, wherein the film graphic to be applied to the vehicle includes conspicuity markings and/or is an imaged film graphic.

5. The method of any of claims 1 to 4, wherein the Application Centers are located sufficiently remotely from one another that every vehicle to be applied with a film graphic is within 4 hours travel from a preselected Application Center for that vehicle.

6. The method of claim 4 or 5, wherein said imaged film graphic is imaged at a central location and shipped to said preselected Application Centers, or at locations proximate to said preselected Application Centers, or at said preselected Application Centers.

7. The method of any of claims 1 to 6, wherein step h) comprises:

   h1) providing a first end and a second end;
   h2) providing a first roll having a longitudinal axis extending between the first and second ends;
   h3) providing a second roll having a longitudinal axis extending between the first and second ends, wherein the second roll is spaced apart from the first roll, and further wherein the longitudinal axes of the first and second rolls are generally parallel with each other;
   h4) providing a seal mechanism extending between the first and second ends and the first and second rolls, wherein the seal mechanism roll forms a seal with each of the first and second rolls;
   h5) providing a vacuum cavity formed between the seal mechanism and the first and second rolls; and
   h6) providing a vacuum port in fluid communication with the vacuum cavity.

8. A system of applying coordinated graphics to a plurality of vehicles located in remote locations with respect to each other, particularly to carry out a method according to any one of the preceding claims, comprising:

   a) a Graphics Coordination Center;
   b) Application Centers preapproved by said Graphics Coordination Center for applying film graphics at various locations;
   c) means for dispatching predetermined vehicles of the plurality of vehicles to be provided with film graphics to preselected Application Centers;
   d) means for applying a predetermined film graphic to the predetermined vehicle; and further comprising at least one of the following features:
   e) a logistics management support for locating and scheduling vehicles for application of film graphics thereto by said Graphics Coordination Center;
   f) a logistics management support for location and printing of film graphics by said Graphics Coordination Center;

g) a logistics management support for availability of the Application Center for application of film graphics to a vehicle by said Graphics Coordination Center.

9. The system of claim 8, including an apparatus comprising:

a first end and a second end;
a first roll having a longitudinal axis extending between the first and second ends;
a second roll having a longitudinal axis extending between the first and second ends, wherein the second roll is spaced apart from the first roll, and further wherein the longitudinal axes of the first and second rolls are generally parallel with each other;
a seal mechanism extending between the first and second ends and the first and second rolls, wherein the seal mechanism roll forms a seal with each of the first and second rolls;
a vacuum cavity formed between the seal mechanism and the first and second rolls; and
a vacuum port in fluid communication with the vacuum cavity.

10. The system of claim 9, wherein seals formed by the seal mechanism comprise rolling seals.

11. The system of any of claims 9 or 10, further comprising a film threaded between a nip formed by the first roll and the sealing roll, the film wrapping around a portion of the first roll, wherein the film preferably comprises an adhesive and a liner covering the adhesive, wherein the liner is removed from the film and adhesive as the film passes through the nip formed by the first roll and the sealing roll.

12. The system of any of claims 9 to 11, wherein the first and second rolls are mounted on a roll substrate.

13. The system of any of claims 9 to 12, further comprising:

a lower first roll opposed to the first roll, wherein the first roll and the lower first roll form a first nip, each of the first rolls having a longitudinal axis extending between the first and second ends;
a lower second roll opposed to the second roll, wherein the second roll and the lower second roll form a second nip, each of the second rolls having a longitudinal axis extending between the first and second ends, wherein the second nip and the second rolls are spaced apart from the first nip and the first rolls, and further wherein the longitudinal axes of the rolls are generally parallel with each other;
a lower seal mechanism extending between the first and second ends and the lower first and second rolls, wherein the lower sealing roll forms a seal with each of the lower first and second rolls;

wherein the vacuum cavity is formed between the seal mechanism, the first and second rolls, the lower seal mechanism, and the lower first and second rolls; and a vacuum port in fluid communication with the vacuum cavity.

14. The system of claim 13, wherein the seals formed by the seal mechanisms with their respective first and second rolls comprise rolling seals.

15. The system of any of claims 10 to 14, wherein each of the seal mechanisms comprises at least one sealing roll having a longitudinal axis generally parallel to the longitudinal axes of the first and second rolls, the longitudinal axes of the sealing roll extending between the first and second ends.

16. The system of any of claims 9 to 15, further comprising end seals on the first and second ends, wherein the end seals further define the vacuum cavity proximate the first and second ends, wherein the vacuum port is preferably located in one the first and second ends.

17. The system of any of claims 9 to 16, further comprising a vacuum source in fluid communication with the vacuum port.

18. The system of any of claims 9 to 17, wherein the first and second rolls each comprise a conformable outer surface.

19. The system of any of claims 9 to 18, wherein at least a portion of the length of at least one of the sealing rolls is transparent, wherein the vacuum cavity can be visually monitored through the sealing roll.

20. The system of any of claims 9 to 19, further comprising a heating device, wherein the heating device is preferably located within the vacuum cavity.

21. A method of laminating a film comprising:

providing a system according to any one of claims 9 to 20;
locating the apparatus proximate a substrate, wherein the substrate further defines the vacuum cavity;
locating a film between the substrate and at least one of the first and second rolls;

drawing a vacuum through the vacuum port, wherein a negative pressure is provided in the vacuum cavity and wherein the first and second rolls are drawn towards the substrate; and moving the apparatus along the substrate in a lamination direction.

22. The method of claim 21, wherein varying the negative pressure within the vacuum cavity varies the pressure formed by at least one of the first and second nips.

23. The method of any of claims 21 or 22, wherein the seal mechanism comprises at least one sealing roll having a longitudinal axis generally parallel to the longitudinal axes of the first and second rolls, the longitudinal axis of the sealing roll extending between the first and second ends, wherein the sealing roll forms a rolling seal with at least the first roll; and further wherein the film extends through the rolling seal formed by the sealing roll and the first roll.

24. The method of claim 23, further comprising removing a liner from the film after the film passes through the rolling seal.

25. A method of laminating at least two continuous webs together comprising:

   providing a system according to any one of claims 13 to 20;
   threading a first web and a second web through the first nip;
   drawing a vacuum through the vacuum port, wherein a negative pressure is provided in the vacuum cavity, and wherein the upper first roll and the lower first roll drawn towards each other, whereby a lamination pressure is provided at the first nip; and moving the first and second webs through the first nip.

26. The method of claim 25, wherein varying the negative pressure within the vacuum cavity varies the lamination pressure provided at the first nip.

27. The method of any of claims 25 or 26, wherein each of the seal mechanisms comprises at least one sealing roll having a longitudinal axis generally parallel to the longitudinal axes of the first and second rolls, the longitudinal axes of the sealing roll extending between the first and second ends; and further wherein the first continuous web extends through the rolling seal formed by the sealing roll and the first roll.

28. The method of claim 27, further comprising removing a liner from the first continuous web after the first web passes through the rolling seal.

29. A film that has been laminated on a substrate using the system of any of claims 9 to 20.

30. The system of any of claims 9 to 20, wherein the apparatus is a steered vacuum-assisted laminating apparatus for laminating a film to a substrate, the apparatus further comprising:

   a steering system for guiding the laminator over the substrate, having a vertical control mechanism maintaining a selected vertical position of the laminator relative to a reference line, and a vehicle moving the laminator along the substrate in a travel direction.

31. The system of claim 30, wherein the reference line comprises:

   a) a laser beam and the vertical control mechanism comprises a sensor detecting the laser beam; and/or
   b) a mechanical guide and the vertical control mechanism comprises a sensor detecting the mechanical guide; and/or
   c) a guide wire and the vertical control mechanism comprises a sensor detecting the guide wire.

32. The system of claim 30 or 31, wherein the vertical control mechanism comprises a gross vertical adjustment mechanism and a fine vertical adjustment mechanism.

33. The system of any of claims 30 to 32, further comprising a depth control mechanism maintaining a selected depth between the laminator and the substrate, wherein the depth control mechanism preferably comprises upper and lower biasing mechanisms proximate upper and lower ends of the laminator, the biasing mechanisms forcing the laminator towards the substrate, the upper and lower biasing mechanism preferably operating independently of each other, and/or the depth control mechanism preferably comprises a mechanical spacer attached to the laminator and/or a sensor detecting the substrate.

34. The system of any of claims 30 to 33, wherein the vehicle comprises a guided vehicle moving along the reference line, and further wherein the depth control mechanism comprises the guided vehicle.

35. The apparatus of any of claims 30 to 34, wherein the vertical control mechanism is mounted on the vehicle.

**36.** The apparatus of any of claims 30 to 35, wherein the vehicle comprises a vacuum source in fluid communication with the vacuum port of the laminator.

**37.** A method of laminating a film to a substrate comprising:

providing a steered vacuum-assisted laminating apparatus comprising a laminator and a steering system according to any of claims 30 to 36;
locating a film between the substrate and at least one of the first and second rolls;
drawing a vacuum in the vacuum cavity formed by the seal mechanism and the first and second laminating rolls, wherein the first and second laminating rolls are drawn against the substrate; and
moving the laminator along the substrate in a travel direction while maintaining the laminator in a selected vertical position relative to a reference line, wherein the film is laminated to the substrate.

**38.** The method of claim 37, wherein the reference line comprises

a) a laser beam and maintaining the selected vertical position comprises detecting the laser beam; and/or
b) a mechanical guide and maintaining the vertical position comprises detecting the mechanical guide; and/or
c) a guide wire and maintaining the vertical position comprises detecting the guide wire.

**39.** The method of claim 37 or 38, wherein maintaining the vertical position comprises making a gross vertical adjustment with a gross vertical adjustment mechanism and a fine vertical adjustment with a fine vertical adjustment mechanism.

**40.** The method of any of claims 37 to 39, wherein moving the laminator comprises locating the laminator on a guided vehicle detecting and moving along the reference line.

**41.** The method of any of claims 37 to 40, further comprising forcing the laminator towards the substrate.

**42.** The method of any of claims 37 to 41, further comprising forcing upper and lower ends of the laminator toward the substrate independently of each other.

Fig. 1

Fig. 2

Fig. 3

Fig. 4

Fig. 5

Fig.6

Fig.7

EP 1 176 577 A1

Fig. 8

Fig. 9

Fig. 10

Fig. 11

Fig. 12

Fig. 13

Fig. 14

| European Patent Office | EUROPEAN SEARCH REPORT | Application Number EP 00 11 6101 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FR 2 743 963 A (N.BOCQUET)<br>25 July 1997 (1997-07-25)<br>* page 1 - page 13; figure 1 * | 1,8 | G09F21/04<br>B29C63/02 |
| A | US 5 122 959 A (M.NATHANSON)<br>31 October 1978 (1978-10-31)<br>* column 5 - column 32; figures 1-6 * | 1,8 | |
| A | DE 21 60 144 A (A.PFLEGER)<br>7 June 1973 (1973-06-07)<br>* page 4 - page 5; figures 1-3 * | 7,20 | |
| A | PATENT ABSTRACTS OF JAPAN<br>vol. 013, no. 369 (M-860),<br>16 August 1989 (1989-08-16)<br>& JP 01 123723 A (HITACHI LTD;OTHERS: 01),<br>16 May 1989 (1989-05-16)<br>* abstract * | 7,17,21,25 | |
| A | PATENT ABSTRACTS OF JAPAN<br>vol. 012, no. 282 (M-726),<br>3 August 1988 (1988-08-03)<br>& JP 63 059517 A (NEC CORP),<br>15 March 1988 (1988-03-15)<br>* abstract * | 7,17,21,25 | TECHNICAL FIELDS SEARCHED (Int.Cl.7)<br><br>G09F<br>B29C |
| A | FR 2 643 487 A (MEDIAS ACTUELS)<br>24 August 1990 (1990-08-24)<br>* page 1 - page 6; figures 1-3 * | 7 | |
| A | EP 0 787 539 A (V.LINS)<br>6 August 1997 (1997-08-06)<br>* page 2 - page 3; figures 1-3 *<br><br>-/-- | 7 | |

The present search report has been drawn up for all claims

| Place of search | Date of completion of the search | Examiner |
|---|---|---|
| THE HAGUE | 1 March 2001 | Boeykens, J |

EPO FORM 1503 03 82 (P04C01)

European Patent

Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

## EUROPEAN SEARCH REPORT

Application Number

EP 00 11 6101

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | FR 2 300 249 A (J.R.BISSCHOP) 3 September 1976 (1976-09-03) * page 6 - page 10; figures 1-11 * | 30,37,41 | |
| A | * page 6 - page 10; figures 1-11 * | 7,31,34, 35,38-40 | |
| Y | DE 197 33 935 A (V.LINS) 11 February 1999 (1999-02-11) * column 3 - column 5; figures 1-7 * | 30,37,41 | |
| A | * column 3 - column 5; figures 1-7 * | 7,20,21, 36 | |

**TECHNICAL FIELDS SEARCHED (Int.Cl.7)**

The present search report has been drawn up for all claims

| Place of search | Date of completion of the search | Examiner |
|---|---|---|
| THE HAGUE | 1 March 2001 | Boeykens, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

| ((logo)) | **European Patent**<br>**Office** | **LACK OF UNITY OF INVENTION**<br>**SHEET B** | **Application Number**<br>EP 00 11 6101 |
|---|---|---|---|

The Search Division considers that the present European patent application does not comply with the requirements of unity of invention and relates to several inventions or groups of inventions, namely:

1. Claims: 1-6,8

    applying coordinated graphics to a plurality of vehicles located in remote locations

2. Claims: 7,9-29

    a system and method of laminating a film

3. Claims: 30-42

    a steering system for guiding the laminator

**ANNEX TO THE EUROPEAN SEARCH REPORT
ON EUROPEAN PATENT APPLICATION NO.**                    EP 00 11 6101

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2001

| Patent document cited in search report | | | Publication date | Patent family member(s) | | Publication date |
|---|---|---|---|---|---|---|
| FR 2743963 | A | | 25-07-1997 | NONE | | |
| US 5122959 | A | | 16-06-1992 | AU 4624089 A | | 14-05-1990 |
| | | | | CA 2001588 A | | 28-04-1990 |
| | | | | WO 9004834 A | | 03-05-1990 |
| DE 2160144 | A | | 07-06-1973 | NONE | | |
| JP 01123723 | A | | 16-05-1989 | NONE | | |
| JP 63059517 | A | | 15-03-1988 | NONE | | |
| FR 2643487 | A | | 24-08-1990 | NONE | | |
| EP 787539 | A | | 06-08-1997 | DE 19603344 A | | 07-08-1997 |
| FR 2300249 | A | | 03-09-1976 | NL 7501383 A | | 09-08-1976 |
| | | | | DE 2603013 A | | 19-08-1976 |
| DE 19733935 | A | | 11-02-1999 | NONE | | |

EPO FORM P0459

For more details about this annex : see Official Journal of the European Patent Office, No. 12/82